## Europäisches Patentamt

## European Patent Office

## Office européen des brevets

(11) Veröffentlichungsnummer: **0 119 987**
**B1**

(12) **EUROPÄISCHE PATENTSCHRIFT**

(45) Veröffentlichungstag der Patentschrift:
16.12.87

(21) Anmeldenummer: 84890042.9

(22) Anmeldetag: 06.03.84

(51) Int. Cl.⁴: **C 02 F 11/12,** C 02 F 11/10,
C 02 F 11/08

(54) Verfahren zum Entwässern von Schlämmen und/oder organischen Stoffen.

(30) Priorität: 17.03.83 AT 953/83

(43) Veröffentlichungstag der Anmeldung:
26.09.84 Patentblatt 84/39

(45) Bekanntmachung des Hinweises auf die Patenterteilung:
16.12.87 Patentblatt 87/51

(84) Benannte Vertragsstaaten:
CH DE FR IT LI SE

(56) Entgegenhaltungen:
DE-B-1 177 572
DE-B-1 216 250
FR-A-1 309 138
GB-A-22 251

(73) Patentinhaber: VOEST- ALPINE Aktiengesellschaft,
Friedrichstrasse 4, A-1011 Wien (AT)

(72) Erfinder: Janusch, Alois, Dipl.- Ing., Theodoraweg
1, A-8706 Leoben (AT)

(74) Vertreter: Haffner, Thomas M., Dr.,
Patentanwaltskanzlei Dipl.- Ing. Adolf
Kretschmer Dr. Thomas M. Haffner
Schottengasse 3a, A-1014 Wien (AT)

## Beschreibung

Die Erfindung bezieht sich auf ein Verfahren zum Entwässern von Schlämmen und/oder organischen Stoffen, insbesondere Klärschlamm, bei welchem der durch Eindickung und vorgeschaltete Entwässerungsverfahren unter mechanischer Beanspruchung des zu entwässernden Materials mit Dampf beaufschlagt wird. Bei derartigen Verfahren ist es bereits bekannt, vor einem Entwässern der Schlämme und/oder organischer Stoffe, beispielsweise in Siebbandpressen oder Zentrifugen eine Konditionierung des Schlammes vorzunehmen, bei welcher in der Regel mit Flokkungshilfsmitteln und mit Wasserdampf drucklos gearbeitet wird. Das auf diese Weise vorbehandelte Material wird in der Folge gepreßt oder zentrifugiert und kann nachfolgend einer weiteren Entwässerungs- bzw. Trocknungsstufe zugeführt werden.

Ein derartiges Verfahren ist beispielsweise der DE-B-1 216 250 zu entnehmen, bei welchem entspannter Heißdampf zur Verbesserung der Trennung von Filtrat und Rückstand an Filterelementen verwendet wird. Aus der DE-B-1 177 572 ist die Verwendung von Saugfiltern bekannt, wobei überhitzter Dampf mit der Maßgabe angewandt wurde, daß eine Kondensation im unteren Drittel des Filterkuchens unter ständiger Verringerung der Überhitzung und des Dampfdruckes auftritt.

Das Wasser ist in Schlämmen in verschiedener Form an den Feststoff gebunden und der Wassergehalt ist weitgehend von der Art und Größe der Feststoffe abhängig. Grundsätzlich kann gesagt werden, daß der Wassergehalt eines Schlammmes umso größer ist, je kleiner seine Feststoffteilchen sind und je mehr organisches Material enthalten ist.

Nach der Art und Bindung des Wassers an den Feststoff unterscheidet man z. B. bei einem ausgefaulten Schlamm aus einer kommunalen Kläranlage mit 95 % WG = Wassergehalt:

| | |
|---|---|
| Zwischen- oder Hohlraumwasser | ca. 70 % |
| Haft- oder Adhäsionswasser, Kapillarwasser, u.a. Zwischenraumkapillar-, Porenwinkel- und Grobkapillarwasser | ca. 20 % |
| Adsorptionswasser, Innenwasser, u.a. Zellflüssigkeit, Hydrat- und Innenkapillarwasser | ca. 10 % |

Der Schwankungsbereich an gebundenen spezifischen Wassermengen ist jedoch sehr groß und wirkt sich auf die Anwendbarkeit und Leistung der einzelnen Trennverfahren entscheidend aus.

Die Bindungskräfte zwischen dem Feststoff und dem Wasser nehmen von Zwischen- oder Hohlraumwasser über das Adhäsions- und Kapillarwasser zum Adsorptions- bzw. Innenwasser stark zu. Im gleichen Sinne nimmt der für den Wasserentzug erforderliche Energieaufwand zu. Bei der Entwässerung müssen die beschriebenen Bindungskräfte gebrochen werden.

Das Zwischen- oder Hohlraumwasser, d.h. das freie Wasser zwischen den Feststoffen ohne direkte Bindung an den Feststoff, kann durch Eindickung, also durch die Wirkung des Schwerefeldes, weitgehend abgetrennt werden.

Das Haft- oder Adhäsionswasser und das Kapillarwasser sind durch Unterdruck sowohl durch die Kohäsionskräfte der Flüssigkeit als durch die Adhäsionskräfte des Feststoffes gebunden und können durch mechanische Einwirkung, wie z. B. Zentrifugieren, Pressen oder Anwendung von Vakuum großteils abgeschieden werden.

Das oberflächengebundene Wasser (Adsorptionswasser) wird von den Ober- oder Grenzflächenkräften des Feststoffes sehr fest gebunden. Als adsorptive Kräfte kommen die Coulombschen Kräfte (Ionenanziehung), die van der Waalschen Kräfte (elektrostatische Kräfte) und die Dispersionskräfte (Anziehungskräfte, die zwischen den Atomen und Molekülen auftreten) zur Wirkung.

Das Adsorptionswasser ist stark verdichtet. In der Literatur werden Drücke von 10 000 bis 25 000 kp/cm$^3$ (980 · 66 bis 2451 MPa) genannt. Bei diesen hohen Drücken verhält sich das gebundene Wasser wie ein fester Körper ("Eis"). Die Stärke der Adsorptionswasserhülle ist gering und beträgt nur 1 bis 10 Moleküle mit einer Schichtstärke von 0,1 - 0,15 µm. Die Oberflächenkräfte ergeben sich aus dem Umstand, daß die Bindungskräfte der Oberflächenmoleküle eines Feststoffes nach außen nicht abgesättigt sind und zum Ausgleich Gas-, Flüssigkeitsmoleküle und Kationen angelagert werden. In der Literatur wird weiters angeführt, daß die Oberflächenkräfte durch die Adsorptionswasserschicht nicht vollständig abgesättigt sind und daher das verbleibende Restfeld weitere Wasserdipole und Ionen bindet. Diese noch unter Überdruck stehende, schwach verdichtete bis unverdichtete, aber noch bewegliche Wasser wird Solvationswasser, Solvatschicht oder auch lyosorbiertes Wasser genannt.

Eine weitere Wasserbindungsart ist durch die am Feststoff vorhandenen positiven Ionen (Kationen) gegeben, die ihrerseits wieder Wasserdipole binden. Sie wird als Hydratation der Ionen bezeichnet.

Entsprechend der beschriebenen verschieden starken Wasserbindung kann bei den bisher bekannten Entwässerungsmethoden von Klärschlämmen, wie z. B. Pressen oder Zentrifugieren nur ein Teil des Wassers abgetrennt werden, wobei der Wassergehalt des entwässerten Schlammes bei ca. 60 - 75 % liegen kann. In diesem Zustand sind die Schlämme im Wassergehaltsbereich von 60 - 65 % krümeligfest, im Wassergehaltsbereich von 70 - 75 % stichfest bis breiartig.

Die Vorgangsweise bei der Entwässerung von Klärschlämmen stellt sich aus Gründen der Wirtschaftlichkeit folgend dar:

1. Eindicken unter Anwendung von Flockungsmitteln zum Zwecke der Vergrößerung der Feststoffteilchen zur besseren Sedimentation (Schwerkraft).

2. Entwässern (Pressen, Absaugen, Zentrifugieren) durch Erzeugung von Druckunterschieden, fallweise Vorkonditionierung des Schlammes durch Erhitzen über Wärmetauscher.

3. Trocknen durch Zuführung thermischer Energie.

Die Erfindung zielt nun darauf ab, die Entwässerungsleistung hinsichtlich der Durchsatzleistung und der Restfeuchtigkeit des entwässerten Schlammes durch mechanische Pressen (z. B. Filterbandpressen) oder Zentrifugen soweit zu erhöhen, daß weitere Entwässerungs- bzw. Trocknungsstufen überflüssig sind und z. B. der entwässerte Schlamm in einer Wirbelschichtfeuerung ohne Ölzusatz- bzw. Stützfeuerung verbrannt werden kann. Zur Lösung dieser Aufgabe besteht die Erfindung im wesentlichen darin, daß der vorentwässerte Schlamm gleichzeitig einer mechanischen Beanspruchung unter Anwendung von Preßkräften und/oder Beschleunigungskräften und einer thermischen Erhitzung durch unmittelbares Beaufschlagen des vorentwässerten Schlammes mit Sattdampf unter überatmosphärischem Druck bis 15 bar und einer Temperatur von 100°C - 200°C ausgesetzt wird und daß zur Herstellung des überatmosphärischen Druckes Sattdampf in einer Menge eingesetzt wird, mit welcher das zu entwässernde Material nicht über 100°C, vorzugsweise nicht über 80°C, erwärmt wird.

Durch die Anwendung eines überatmosphärischen Sattdampfdruckes gleichzeitig mit der Anwendung von Preß- oder Zentrifugalkräften läßt sich die Wasserbindung in chemischer und physikalischer Hinsicht soweit verändern, daß durch diese Maßnahmen die Entwässerungsergebnisse von konventionellen Filterbandpressen, Filterpressen oder Zentrifugen wesentlich verbessert werden können.

Bei der Durchwärmung des Feststoffes, insbesondere der organischen Feststoffe, kommt es zu einer stofflichen Veränderung, die zu einer weiteren Freisetzung von Hydrat- und Innenkapillarwasser führt. Die Erwärmung der organischen Feststoffe darf nicht zu einer Hydrolyse bzw. Zersetzung der organischen Substanz führen, da damit die beabsichtigte Entwässerung des Schlammes nicht mehr möglich wäre. Erfindungsgemäß wird daher Sattdampf in einer Menge eingesetzt werden, mit welcher das zu entwässernde Material nicht über 100°C, vorzugsweise nicht über 80°C, erwärmt wird, wodurch sich die gewünschte Veränderung der Grenzflächenspannung in der Adhäsionsschicht und die Temperaturerhöhung mit dem gleichen Arbeitsmedium erreichen läßt.

Dei der Verwendung von Sattdampf tritt, wie die Versuche zeigen, bei ca. 200°C eine thermische Zersetzung von organischer Substanz, insbesondere biogener Substanz ein, die einerseits das Ausbringen des Feststoffes absinken läßt und andererseits das durch Pressen oder Zentrifugieren abgeschiedene Wasser mit zersetzter organischer Substanz belastet. Mit Vorteil wird daher Sattdampf mit 10 bar und 180°C verwendet.

Der durch diese Behandlung erzielbare bessere Entwässerungseffekt ist einerseits auf die enorme Herabsetzung der dynamischen Viskosität des Wassers von $102,2 \cdot 10^6$ kp·s/m² (20°C) auf $14,1 \cdot 10^6$ Kp·s/m² (200°C) [$1002,2 \cdot 10^6$ Pa · s (20°C) auf $138,7 \cdot 10^6$ Pa · s (200°C)] zurückzuführen, andererseits wird die spez. Dichte φ von 0,999 (20°C) auf 0,865 (200°C) herabgesetzt. Bei der schrittweisen Durchwärmung des Schlammes tritt zuerst eine durch die vorgenannten Effekte schnellere Abgabe des Haft- und Kapillarwassers ein.

Bei der weiteren Erwärmung wird die gegenseitige potentielle Energie der adsorptiv gebundenen Wassermoleküle so vergrößert, daß eine Abtrennung möglich wird.

Insbesondere bei der Verwendung von Siebbandpressen wird üblicherweise eine Vorentwässerung unter Anwendung eines geringen Preßdruckes und in der Folge eine Pressung mit stufenweise steigendem Druck vorgenommen. Es hat sich gezeigt, daß die deutlichste Verbesserung der Entwässerungsleistung dann eintritt, wenn bei Verwendung derartiger Pressen die Einleitung des Sattdampfes in der Stufe mit dem höchsten Preßdruck vorgenommen wird. Auf diese Weise genügt es, lediglich einen Teil der konventionellen Entwässerungsmaschinen mit einem Gehäuse zu ummanteln, in welchem der gewünschte Sattdampfdruck aufgebaut werden kann. Die Einbringung des zu entwässernden Materials erfolgt in diesem Fall über Druckschleusen, wobei die Ausbringung in eine gegebenenfalls nachgeschaltete Druckentwässerung unmittelbar mit dem bei der Pressung angewendeten Dampfdruck erfolgen kann. Bei Verwendung von Dampf zur Druckerhöhung bei der Erwärmung entsteht notwendigerweise ein Anteil kondensierenden Wassers zusätzlich zu dem ausgepreßten Stoffwasser und da dieses kondensierende Wasser gegenüber dem ohne Dampfdruck und ohne Temperaturerhöhung ausgepreßten Stoffwasser reicher an organischen Substanzen ist, ist es von Vorteil, wenn das bei Verwendung von Dampf zur Druckerhöhung und Erwärmung in der Presse bzw. Zentrifuge kondensierende Wasser gesammelt und vor der Ableitung einer Druckoxydation unterworfen wird.

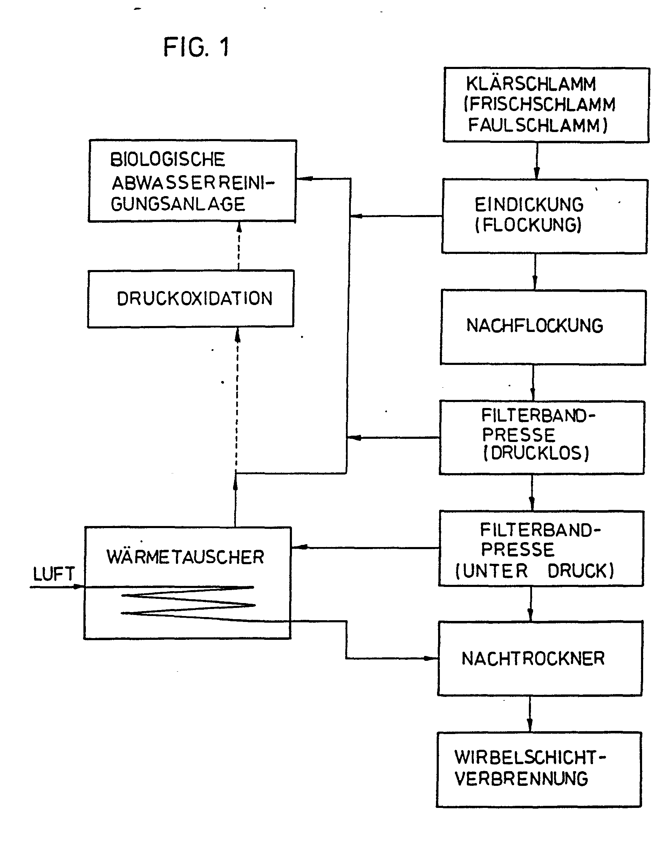

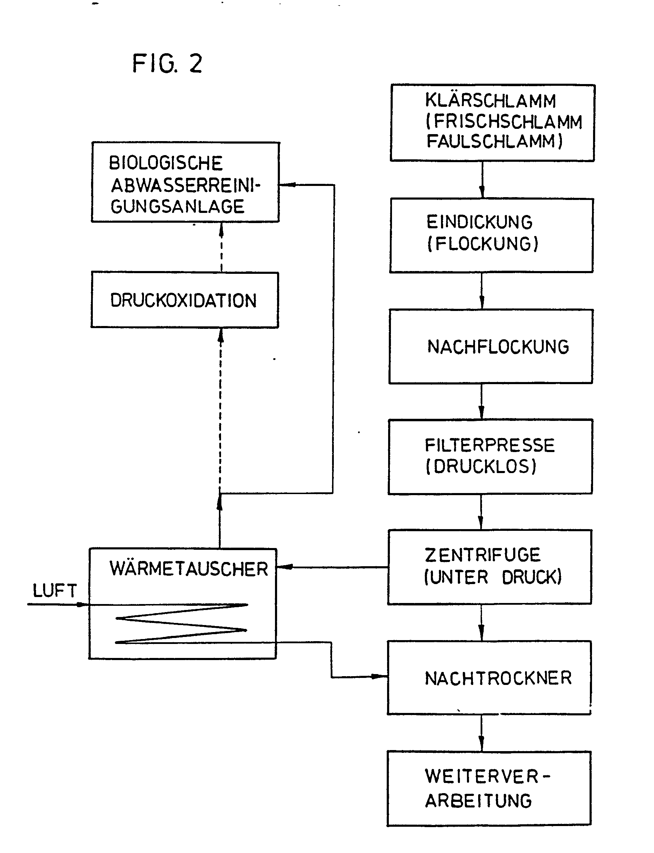

Zwei Ausführungsformen des erfindungsgemäßen Verfahrens sind in den Fig. 1 und 2 dargestellt.

Gemäß der Darstellung in Fig. 1 wird der frisch aus der biologischen Abwasserreinigungsanlage ausgebrachte Überschußschlamm oder der ausgefaulte Klärschlamm unter Verwendung von Flockungsmitteln eingedickt und gegebenenfalls nach einer Nachflockung einer Filterbandpresse gängiger Bauart zugeführt. Nach dieser Vorbereitung, die auf sehr wirtschaftliche Weise den Wassergehalt auf 60 - 75 % verringert, wird der vorentwässerte Schlamm in eine unter Sattdampfdruck arbeitenden Filterbandpresse eingeschleust und im Falle einer schwer entwässerbaren Schlammzusammensetzung auf max. 180-200°C erwärmt.

Das unter diesen Bedingungen abgepreßte Wasser wird laufend ausgeschleust. Der entwässerte Schlamm wird ebenfalls laufend ausgeschleust und zwecks Ausnutzung der im Feststoff vorhandenen fühlbaren Wärme ausdampfen gelassen. Dies kann auf einem Band oder einem Belüftungsaggregat (Wirbelschichttrockner u.a.) erfolgen. Je nach Weiterverwendung des entwässerten Schlammes und des damit erforderlichen Restwassergehaltes kann eine weitere Abtrocknung dadurch erfolgen, daß dem Abwasser der unter Druck arbeitenden Siebbandpresse die Wärme durch Wärmetauscher entzogen wird und damit Trocknungsluft erwärmt und diese für die Nachtrocknung verwendet wird. Im gegenständlichen Beispiel wird der 30 - 35 % TS getrocknete Schlamm in einer Wirbelschichtverbrennungsanlage ohne Stützfeuerung beseitigt. Aus der Abwärme der Verbrennungsgase wird der erforderliche Sattdampf für die unter Druck arbeitende Filterbandpresse erzeugt. Die restliche Abwärme kann für Heizzwecke oder aber auch für eine weiterreichende Abtrocknung eines Teiles des Schlammes für Düngezwecke oder eine Brikettherstellung verwendet werden.

Das bei schwierig entwässerbaren Schlämmen anfallende heiße Abwasser, das bei Verwendung der maximal zulässigen Sattdampftemperatur von ca. 200°C anfällt und eine erhöhte organische Belastung aufweist, wird zweckmäßigerweise vor seiner Einleitung in die biologische Abwasserreinigungsanlage einer Druckoxydation unterzogen.

In Fig. 2 ist an Stelle der unter Druck arbeitenden Filterbandpresse eine unter Druck arbeitende Zentrifuge dargestellt. Bei Schlämmen mit besonders schwierigem Entwässerungscharakter kann die Entwässerung im Zentrifugalfeld bessere Ergebnisse erbringen. Im übrigen sind die verfahrenstechnischen Bedingungen gleich.

In beiden Beispielen stellt die Vorabscheidung des leicht abtrennbaren Wassers aus Gründen der Minimierung des Energieverbrauches eine wichtige verfahrenstechnische Forderung dar. In der unter Druck arbeitenden Entwässerungsstufe soll nur der unbedingt notwendige Wassergehalt des Schlammes erhitzt werden.

Innerhalb der Zentrifuge, insbesondere in einem unteren Bereich derselben, ist eine Austragsöffnung für $CO_2$-Gase vorgesehen.

Das aus der Filterbandpresse bzw. der Zentrifuge unter Druck austretende Heißwasser kann in einfacher Weise zur direkten oder indirekten Erwärmung im Bereich der Nachflockung benutzt werden und anschließend einer biologischen Abwasserreinigung zugeführt werden.

**Patentansprüche**

1. Verfahren zum Entwässern von Schlämmen und/oder organischen Stoffen, insbesondere Klärschlamm, bei welchem der durch Eindickung und vorgeschaltete Entwässerungsverfahren vorentwässerte Schlamm unter mechanischer Beanspruchung des zu entwässernden Materials mit Dampf beaufschlagt wird, dadurch gekennzeichnet, daß der vorentwässerte Schlamm gleichzeitig einer mechanischen Beanspruchung unter Anwendung von Preßkräften und/oder Beschleunigungskräften und einer thermischen Erhitzung durch unmittelbares Beaufschlagen des vorentwässerten Schlammes mit Sattdampf unter überatmosphärischem Druck bis 15 bar und einer Temperatur von 100°C - 200°C ausgesetzt wird und daß zur Herstellung des überatmosphärischen Druckes Sattdampf in einer Menge eingesetzt wird, mit welcher das zu entwässernde Material nicht über 100°C, vorzugsweise nicht über 80°C, erwärmt wird.

2. Verfahren nach Anspruch 1, dadurch gekennzeichnet, daß Sattdampf mit 10 bar bei 180°C eingesetzt wird.

3. Verfahren nach Anspruch 1 oder 2, dadurch gekennzeichnet, daß bei Verwendung von mehrstufigen Pressen, insbesondere Siebbandpressen, der Sattdampf der Stufe mit dem höchsten Preßdruck zugesetzt wird.

4. Verfahren nach einem der Ansprüche 1 bis 3, dadurch gekennzeichnet, daß das bei Verwendung von Dampf zur Druckerhöhung und Erwärmung in der Presse bzw. Zentrifuge kondensierende Wasser gesammelt und vor der Ableitung einer Druckoxydation unterworfen wird.

**Claims**

1. Process for dewatering sludges and/or organic matter, particularly sewage sludge, in which the sludge predewatered by thickening and preceding dewatering methods is subjected to steam under mechanical stress of the material to be dewatered, characterised in that the predewatered sludge is simultaneously subjected to mechanical stress by applying pressing forces and/or accelerating forces and thermal heating by direct action of saturated steam of superatmospheric pressure up to 15 bar and a temperature of 100°C - 200°C on the predewatered sludge, and that for obtaining superatmospheric pressure saturated steam is being charged in an amount by which the material to be dewatered is heated to not more than 100°C, preferably not more than 80°C.

2. Process as claimed in claim 1, characterised in that saturated steam is charged at 10 bar and 180°C.

3. Process as claimed in claim 1 or 2, characterised in that when using multipressure stage presses, particularly sieve belt presses, the saturated steam is charged to the stage having the highest pressing power.

4. Process as claimed in any one of claims 1 to 3, characterised in that when using steam for pressure boosting and heating, condensation water from the press or centrifuge, resp., is collected and subjected to pressure oxidation prior to draining.

## Revendications

1. Procédé pour la déshydratation de boues et/ou de matières organiques, en particulier de boues des eaux d'égoût, dans lequel la boue, prédéshydratée par épaississement et par une opération de déshydratation préalable, est traitée à la vapeur, la matière à déshydrater étant soumise à une contrainte mécanique, caractérisé en ce que la boue prédéshydratée est exposée simultanément à une contrainte mécanique sous utilisation de forces de compression et/ou de forces d'accélération, et à un chauffage thermique réalisé par application directe, à la boue prédéshydratée, d'une vapeur saturée sous une pression supérieure à la pression atmosphérique jusqu'à 15 bars et à une température de 100-200°C, et en ce que, pour réaliser la pression supérieure à la pression atmosphérique, on utilise une vapeur saturée en une quantité permettant de chauffer la matière à déshydrater à une température non supérieure à 100°C, de préférence non supérieure à 80°C.

2. Procédé selon la revendication 1, caractérisé en ce qu'on utilise une vapeur saturée sous 10 bars à 180°C.

3. Procédé selon la revendication 1 ou 2, caractérisé en ce que, lors de l'utilisation de presses à plusieurs étages, en particulier de presses à tamis à bande, la vapeur saturée est ajoutée à l'étage présentant la pression de compression la plus élevée.

4. Procédé selon l'une des revendications 1 à 3, caractérisé en ce que l'eau qui se condense dans la presse ou dans la centrifugeuse quand on utilise une vapeur pour l'élévation de pression et pour le chauffage est recueillie et soumise, avant évacuation, à une oxydation sous pression.

FIG. 1

```
┌──────────────────────────┐        ┌──────────────────────────┐
│                          │        │     KLÄRSCHLAMM          │
│   BIOLOGISCHE            │◄──┐     │   (FRISCHSCHLAMM        │
│   ABWASSERREINI-        │   │     │    FAULSCHLAMM)         │
│   GUNGSANLAGE           │◄─┐│     └──────────┬───────────────┘
└──────────────────────────┘  ││                │
         ▲                    ││     ┌──────────▼───────────────┐
         ┊                    │└─────┤   EINDICKUNG            │
┌──────────────────────────┐ │      │   (FLOCKUNG)            │
│                          │ │      └──────────┬───────────────┘
│   DRUCKOXIDATION         │ │                 │
│                          │ │      ┌──────────▼───────────────┐
└──────────────────────────┘ │      │                          │
         ▲                    │      │   NACHFLOCKUNG          │
         ┊                    │      └──────────┬───────────────┘
         ┊                    │                 │
         ┊                    │      ┌──────────▼───────────────┐
         ┊                    └──────┤   FILTERBAND-           │
         ┊                           │   PRESSE                │
         ┊                           │   (DRUCKLOS)            │
         ┊                           └──────────┬───────────────┘
┌──────────────────────────┐                    │
│                          │◄────────┐┌──────────▼───────────────┐
│   WÄRMETAUSCHER          │         ││   FILTERBAND-           │
│                          │◄────────┤│   PRESSE                │
LUFT ─►                    │         ││   (UNTER  DRUCK)        │
│    ∿∿∿∿                  │         │└──────────┬───────────────┘
│                          ├─────┐   │           │
└──────────────────────────┘     │   │┌──────────▼───────────────┐
                                 └───►│   NACHTROCKNER          │
                                      └──────────┬───────────────┘
                                                 │
                                      ┌──────────▼───────────────┐
                                      │   WIRBELSCHICHT-        │
                                      │   VERBRENNUNG           │
                                      └──────────────────────────┘
```

FIG. 2